# EUROPÄISCHE PATENTSCHRIFT

(11) **EP 2 406 512 B1**
(45) Veröffentlichungstag und Bekanntmachung des Hinweises auf die Patenterteilung: **06.03.2013**
(21) Anmeldenummer: 10710196.6
(22) Anmeldetag: 09.03.2010
(51) Int. Cl.: F16D 1/08

(54) **VERBINDUNG EINER WELLE MIT EINEM AUFNAHMETEIL**
CONNECTION OF A SHAFT TO A RECEIVING PART
ASSEMBLAGE D'UN ARBRE A UNE PIECE DE RECEPTION

(30) Priorität: 12.03.2009 DE 102009012479
(43) Veröffentlichungstag der Anmeldung: 18.01.2012
(73) Patentinhaber: SEW-EURODRIVE GmbH & Co KG, 76642 Bruchsal (DE)
(72) Erfinder: SCHWAN, Tobias, 69168 Wiesloch (DE)
(86) Internationale Anmeldenummer: PCT/EP2010/001445
(87) Internationale Veröffentlichungsnummer: WO 2010/102775

(56) Entgegenhaltungen:
- EP-A1- 0 447 790
- DE-A1- 3 711 163
- FR-A1- 2 571 105
- US-A- 2 082 379

## Beschreibung

Die Erfindung betrifft eine Verbindung einer Welle mit einem Aufnahmeteil.

Bei Welle-Nabe-Verbindungen ist eine Welle eingesteckt vorgesehen in einer Ausnehmung der Nabe, also des Aufnahmeteils.

**Aus der** EP 0 447 790 A1 **ist eine Welle-Nabe-Verbindung mit einer zwischengeordneten Buchse bekannt.**

**Aus der** FR 2 571 105 A1 **ist ebenfalls eine Verbindung an einer drehbar gelagerten Welle bekannt.**

**Aus der** DE 37 11 163 A1 **ist eine Vorrichtung zum Festspannen von scheiben- oder ringförmigen Walzen bekannt.**

**Aus der** US 2 082 379 A **ist eine Pressverbindung bekannt**

Der Erfindung liegt daher die Aufgabe zugrunde, eine Welle-Nabe-Verbindung weiterzubilden.

Erfindungsgemäß wird die Aufgabe bei der Verbindung einer Welle mit einem Aufnahmeteil nach den in Anspruch 1 angegebenen Merkmalen gelöst.

Wichtige Merkmale der Erfindung bei der Verbindung sind, dass die Verbindung zum Verbinden einer Welle mit einem Aufnahmeteil, insbesondere Welle-Nabe-Verbindung, vorgesehen ist,
wobei die Welle einen ersten axialen Bereich umfasst, der im Aufnahmeteil aufnehmbar ist,
wobei die Welle einen weiteren axialen Bereich aufweist mit einem größeren Durchmesser als im ersten axialen Bereich,
wobei zwischen erstem und weiterem axialen Bereich ein Übergangsbereich vorgesehen ist, dessen Durchmesser in axialer Richtung vom ersten zum weiteren axialen Bereich anwächst, vom Wert des Durchmessers des ersten zum Durchmesserwert des weiteren axialen Bereichs, insbesondere nicht ausschließlich sprunghaft anwächst,
wobei zwischen Welle und Aufnahmeteil eine Buchse vorgesehen ist,
wobei die Buchse einen axialen Bereich, insbesondere einen axialen Endbereich, aufweist, der vom Übergangsbereich elastisch derart auslenkbar ist, insbesondere beim Einschieben der Welle in das Aufnahmeteil, dass er auf die Wandung des Aufnahmeteils angedrückt ist.

Von Vorteil ist dabei, dass bei vorhandenen Ausrichtungsunterschieden oder Versätzen zwischen den Achsen der Welle und der Nabe Walkbewegungen bei Drehbewegung der Welle-Nabe-Verbindung zwar auftreten, aber mittels der Buchse kompensierbar sind. Somit ist die Abnutzung und auch die Korrosion, insbesondere auch die Kontaktkorrosion, verringert.

Weiter vorteilig ist auch, dass das elastische Auslenken mittels eines einfach zu fertigenden Übergangsbereichs bewirkbar ist und somit nur eine Verdünnung der Wandung der Buchse im entsprechend, nach Einschieben benachbarten Bereich vorzusehen ist. Mittels der Verdünnung ist ein elastisch verformbarer Bereich an der Buchse ausbildbar, wodurch in einfacher Weise eine kraftschlüssige Verbindung zwischen Buchse und Aufnahmeteil herstellbar ist. Der elastisch verformbare Bereich der Buchse ist auch alternativ ohne Verdünnung sondern durch nach radial innen gerichtete Ausformung herstellbar. Somit ist der elastisch verformbare Bereich zwischen einem Bereich der Welle und einem Bereich des Aufnahmeteils verformbar und/oder komprimierbar und auf diese Weise die kraftschlüssige Verbindung realisierbar.

Bei einer vorteilhaften Ausgestaltung ist der Durchmesser der Welle im ersten axialen Bereich derart gewählt, dass die Welle passgenau in der Buchse vorsehbar ist. Von Vorteil ist dabei, dass ein Einstecken der Welle in die Buchse zumindest anfangs mit geringer Kraft ausführbar ist. Erst wenn der Übergangsbereich in Berührung tritt mit dem elastischen Bereich der Buchse steigt die für das Einstecken notwendige Kraft an.

Bei einer vorteilhaften Ausgestaltung ist der Außendurchmesser der Buchse in einem axialen Bereich der Buchse, der den ersten axialen Bereich der Welle umgibt, derart gewählt, dass die Buchse passgenau im Aufnahmeteil vorsehbar ist. Von Vorteil ist dabei, dass ein Einstecken der Buchse ins Aufnahmeteil mit geringer Kraft ausführbar ist, insbesondere vor dem Einführen der Welle.

Bei einer vorteilhaften Ausgestaltung umfasst der Übergangsbereich zumindest einen Teilbereich, in welchem der Durchmesser als Funktion der axialen Länge streng monoton anwächst. Von Vorteil ist dabei, dass ein kontinuierlich zunehmendes Auslenken des elastischen Bereichs der Buchse mit zunehmendem Einstecken in axialer Richtung ermöglicht.

Bei einer vorteilhaften Ausgestaltung umfasst der Übergangsbereich zumindest einen Teilbereich, in welchem der Durchmesser als Funktion der axialen Länge einer Kreisfunktion entsprechend anwächst oder einer Ellipsenfunktion entsprechend. Von Vorteil ist dabei, dass die Herstellung besonders einfach ist, da die Programmierung eines Kreises besonders einfach und schnell ausführbar ist. Bei Verwendung einer Ellipsenfunktion lässt sich der axiale Verschiebungsbereich, welcher zum Erreichen einer bestimmten Auslenkung und somit Kraft für die kraftschlüssige Verbindung notwendig ist, vergrößern

Bei einer vorteilhaften Ausgestaltung sind die Kanten am axialen Endbereich der Buchse angefast ausgeführt. Von Vorteil ist dabei, dass eine einfache Herstellung ermöglicht ist und ein Einfädeln erleichtert ist.

Bei einer vorteilhaften Ausgestaltung ist die Buchse im Wesentlichen einem Hohlzylinder entsprechend ausgeformt. Von Vorteil ist dabei, dass die Herstellung kostengünstig und einfach ist.

Bei einer vorteilhaften Ausgestaltung ist die Buchse aus Teflon gefertigt. Von Vorteil ist dabei, dass die Kontaktkorrosion vermindert ist und außerdem in Umlaufsrichtung umlaufende Walkbewegungen bei Fehlausrichtungen der gedachten Mittelachsen der Welle und des Aufnahmeteils mittels der Buchse ausgleichbar sind.

Bei einer vorteilhaften Ausgestaltung sind die Welle und das Aufnahmeteil aus Stahl oder Aluminium gefertigt. Von Vorteil ist dabei, dass mittels der Buchse ein direkter Kontakt der Welle zum Aufnahmeteil innerhalb der Ausnehmung des Aufnahmeteils verhindert ist.

Bei einer vorteilhaften Ausgestaltung ist die Buchse zur Ausformung des elastisch auslenkbaren Bereichs mit einer dünneren Wandstärke ausgeführt als in einem weiteren Bereich, der den ersten axialen Bereich der Welle nach deren Einführen ins Aufnahmeteil umgibt. Von Vorteil ist dabei, dass der elastische Bereich in einfacher kostengünstiger Weise herstellbar ist.

Bei einer vorteilhaften Ausgestaltung sind mittels des gegen die Wandung des Aufnahmeteils angedrückten axialen Bereichs der Buchse derart hohe Normalkräfte gegen die Wandung vorgesehen, dass zwischen Welle und Aufnahmeteil durch die Buchse hindurch entsprechend hohe Drehmomente übertragbar sind. Von Vorteil ist dabei, dass eine leistungsfähige kraftschlüssige Verbindung geschaffen ist.

Bei einer vorteilhaften Ausgestaltung ist der Außendurchmesser der Buchse passgenau zum Innendurchmesser der entsprechenden Ausnehmung des Aufnahmeteils ausgeführt. Von Vorteil ist dabei, dass das Einführen der Buchse in das Aufnahmeteil mit geringer Kraft bewerkstelligbar ist und nach Einführen der Welle in die Ausnehmung der Buchse der elastische Bereich auslenkbar und/oder verformbar ist und somit hohe Drehmomente übertragbar sind.

Bei einer vorteilhaften Ausgestaltung ist der Außendurchmesser der Welle im ersten axialen Bereich passgenau zum Innendurchmesser der entsprechenden Ausnehmung der Buchse ausgeführt. Von Vorteil ist dabei, dass das Einführen des ersten axialen Bereichs in die Buchse hinein mit geringer Kraft ausführbar ist. Eine höhere Einpresskraft wird erst nach in Berührung Treten des Übergangsbereichs mit dem elastischen Bereich der Buchse notwendig.

Bei einer vorteilhaften Ausgestaltung ist die Welle mit der Rotorwelle eines Elektromotors verbunden oder ist einstückig mit dieser ausgeführt. Von Vorteil ist dabei, dass mittels der Buchse quasi eine Kupplung zum Aufnahmeteil realisierbar ist. Insbesondere werden Achsversätze oder Achsrichtungs-Unterschiede mittels der Buchse ausgleichbar.

Bei einer vorteilhaften Ausgestaltung ist das Aufnahmeteil ein Kupplungsteil einer zwischen einem Motor und einem Getriebe vorgesehenen Kupplung oder ist ein zu einem Getriebe gehöriges Teil. Von Vorteil ist dabei, dass die Erfindung bei verschiedenen Anordnungen, Maschinen und Anlagen einsetzbar ist.

Weitere Vorteile ergeben sich aus den Unteransprüchen.

### Bezugszeichenliste

1 Aufnahmeteil, Nabe
2 Buchse
3 Welle
4 elastischer Bereich
5 Übergangsbereich

Die Erfindung wird nun anhand von Abbildungen näher erläutert:

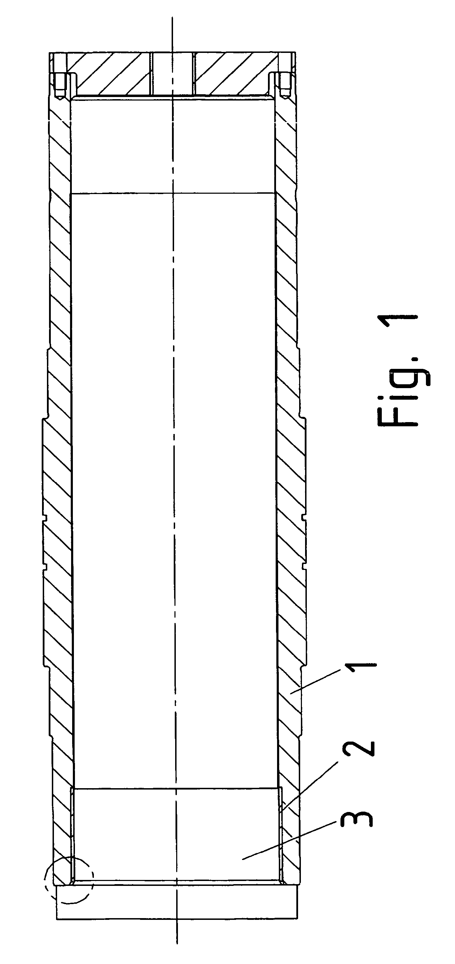

In der Figur 1 ist eine erfindungsgemäße Welle-Nabe-Verbindung gezeigt.

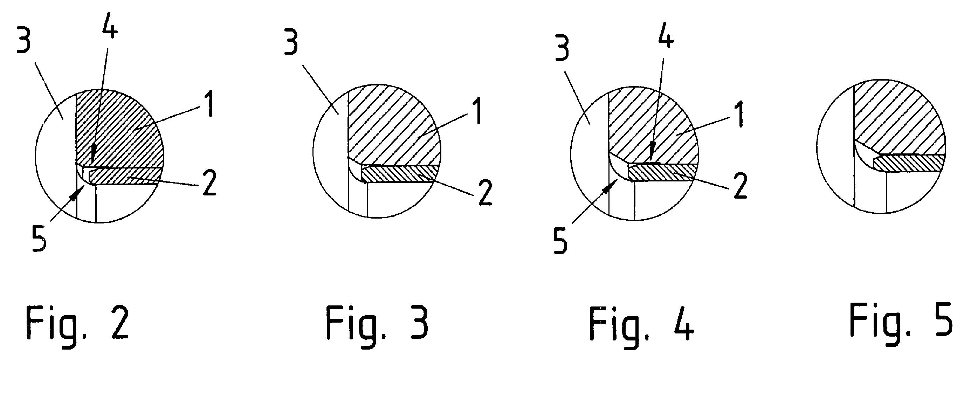

In den Figuren 2 bis 5 sind vergrößerte Ausschnitte einer jeweiligen Variante gezeigt.

Das Aufnahmeteil 1 weist eine zylindrische Ausnehmung auf, in welcher eine Buchse vorgesehen ist. Die Kante der Ausnehmung des Aufnahmeteils 1 ist angefast ausgeführt. Die Buchse 2 ist hierbei eingesteckt in die zylindrische Ausnehmung vorgesehen. Der Außendurchmesser der Buchse 2 ist mit Ausnahme eines axialen Randbereichs passgenau gewählt zum Innendurchmesser im Aufnahmeteil 1.

Die Buchse 2 ist im Wesentlichen in Form eines Hohlzylinders ausgeführt.

Die Buchse 2 weist wiederum an ihrer radial inneren Oberfläche eine zylindrische Ausnehmung auf und es ist somit eine im Aufnahmebereich zylindrisch ausgeformte Welle 3 aufnehmbar.

Die Welle 3 weist einen Absatz auf. Der Durchmesser der Welle 3 in einem ersten axialen Bereich, der nach Einführen der Welle 3 im Bereich des Aufnahmeteils sich befindet, ist passgenau gewählt zum Innendurchmesser der Buchse 2.

Der Durchmesser der Welle 3 in einem weiteren axialen Bereich, der nach Einführen der Welle 3 ins Aufnahmeteil 1 sich nicht im Aufnahmeteil befindet, ist größer ausgeführt als der Innendurchmesser des Aufnahmeteils.

Der zwischen erstem und weiterem axialen Bereich vorgesehene Absatz ist mit einem Radius ausgeführt. Dies bedeutet, dass der Durchmesser vom ersten axialen Bereich ausgehend zum weiteren axialen Bereich hin einer Kreisfunktion entsprechend ansteigt und nach einem Kreiswinkel von 90° sprunghaft ansteigt auf den Außendurchmesserwert des weiteren axialen Bereichs.

Die Buchse 2 weist an ihrem dem weiteren Bereich zugewandten axialen Endbereich einen elastisch verformbaren Bereich mit vorzugsweise dünnerer Wandstärke auf. Somit ist mittels des Radius dieser Bereich gegen die Innenwandung des Aufnahmeteils drückbar, wodurch eine kraftschlüssige Verbindung entsteht.

Die axial herausstehenden Kanten der Buchse 2 sind angefast. Dabei erhöhen die Fasen an der Aüßenkante und Innenkante der Buchse die Elastizität des verformbaren Bereichs. Außerdem ist die Fase an der Außenkante derart flach ausführbar, dass ein weiter Bereich für die kraftschlüssige Verbindung zur Verfügung steht. Bei weiteren erfindungsgemäßen Ausführungsbeispielen ist dieses Fase derart flach ausgeführt, dass sie sich im Wesentlichen über den gesamten elastisch verformten Bereich erstreckt.

Es hat sich als besonders vorteilhaft erwiesen einem Winkelbereich von etwa 30° der Kreisfunktion zum Auslenken des elastischen Bereichs der Buchse 2 vorzusehen. Dies bedeutet also, dass das axiale Ende der Buchse an diesem Punkt der Kreisfunktion sich befindet nach Einschieben des Wellenteils, also der Welle in die Ausnehmung Buchse.

Während des Einschiebens des Wellenbereichs rückt die Welle weiter in die Aufnahmeöffnung, also Ausnehmung, der Buchse weiter vor bis der Radiusabschnitt in Berührung kommt mit dem elastischen Bereich der Buchse 2 und diesen zunehmend mit weiterem axialen Einschieben auslenkt. Entsprechend wird die zwischen Buchse 2 und Aufnahmeteil 1 wirkenden Normalkräfte größer und somit hohe Haftreibung gegen Drehbewegung in Umfangsrichtung ermöglicht. Sobald der elastische Bereich der Buchse maximal ausgelenkt ist, also der elastische Bereich an der Wandung der Ausnehmung des Aufnahmeteils anliegt, ist keine weitere Auslenkung mehr ermöglicht und ein weiteres Einschieben quetscht die Wandung der Buchse 2 zusammen.

Mittels der hohen Reibungskräfte sind daher hohe Drehmomente von der Welle über die Buchse auf das Aufnahmeteil oder umgekehrt übertragbar.

Vorzugsweise ist die Buchse aus einem Material, das tribologisch günstig gepaart ist mit den berührenden Materialien. Beispielhaft ist Teflon verwendet. Somit sind einerseits hohe elastische Auslenkungen ermöglicht sowie andererseits hohe Reibungskräfte erreichbar und somit hohe Drehmomente übertragbar zwischen Welle und Aufnahmeteil. Des Weiteren ist die Kontaktkorrosion zwischen Aufnahmeteil und Welle verhindert.

Bei weiteren erfindungsgemäßen Ausführungsbeispielen ist die Buchse im Aufnahmeteil eingespritzt, umspritzt oder anderweitig stoffschlüssig vorgesehen. Somit ist ein Einführen der Buchse ins Aufnahmeteil nicht notwendig. Der elastische Bereich ist bei einer Herstellung der Buchse mittels Einspritz- oder Umspritzen derart herstellbar, dass ein Ring, also dünner Hohlzylinder am axialen Endbereich des Aufnahmeteils vorgesehen wird und dann der Einspritz- oder Umspritz-Vorgang ausgeführt wird. Dabei ist das Material des Rings derart gewählt, dass der zum Einspritz- oder Umspritzen verwendete Kunststoff nach Aushärten nicht am Ring anhaftet und somit der Ring dann herausziehbar ist.

Bei weiteren erfindungsgemäßen Ausführungsbeispielen ist statt eines Abschnittes mit Kreisfunktion eine andere ansteigende Funktion gewählt. Wesentlich ist hierbei, dass kein steiler Sprung sondern ein monotones, vorzugsweise streng monotones Ansteigen im Bereich der kraftschlüssigen Verbindung mit der Buchse vorgesehen ist.

## Patentansprüche

1. Verbindung einer Welle (3) mit einem Aufnahmeteil (1) insbesondere Welle-Nabe-Verbindung,
wobei die Welle (3) einen ersten axialen Bereich umfasst, der im Aufnahmeteil (1) aufnehmbar ist,
wobei die Welle (3) einen weiteren axialen Bereich aufweist mit einem größeren Durchmesser als im ersten axialen Bereich,
wobei zwischen erstem und weiterem axialen Bereich ein Übergangsbereich (5) vorgesehen ist, dessen Durchmesser in axialer Richtung vom ersten zum weiteren axialen Bereich anwächst, vom Wert des Durchmessers des ersten zum Durchmesserwert des weiteren axialen Bereichs, insbesondere nicht ausschließlich sprunghaft anwächst,
wobei zwischen Welle (3) und Aufnahmeteil (1) eine Buchse (2) vorgesehen ist,
**dadurch gekennzeichnet, dass**
die Buchse (2) einen axialen Bereich, insbesondere einen axialen Endbereich, aufweist; der vom Übergangsbereich (5) elastisch derart auslenkbar ist, insbesondere beim Einschieben der Welle (3) in das Aufnahmeteil (1), dass er auf die Wandung des Aufnahmeteils angedrückt ist.

2. Verbindung nach Anspruch 1,
**dadurch gekennzeichnet, dass**
der Durchmesser der Welles (3) im ersten axialen Bereich derart gewählt ist, dass die Welle (3) passgenau in der Buchse (2) vorsehbar ist.

3. Verbindung nach mindestens einem der vorangegangenen Ansprüche,
**dadurch gekennzeichnet, dass**
der Außendurchmesser der Buchse (2) in einem axialen Bereich der Buchse (2), der den ersten axialen Bereich der Welle (3) umgibt, derart gewählt ist, dass die Buchse (2) passgenau im Aufnahmeteil (1) vorsehbar ist.

4. Verbindung nach mindestens einem der vorangegangenen Ansprüche,
**dadurch gekennzeichnet, dass**
der Übergangsbereich (5) zumindest einen Teilbereich umfasst, in welchem der Durchmesser als Funktion der axialen Länge streng monoton anwächst.

5. Verbindung nach mindestens einem der vorangegangenen Ansprüche,
**dadurch gekennzeichnet, dass**
der Übergangsbereich (5) zumindest einen Teilbereich umfasst, in welchem der Durchmesser als Funktion der axialen Länge einer Kreisfunktion entsprechend anwächst oder einer Ellipsenfunktion entsprechend.

6. Verbindung nach mindestens einem der vorangegangenen Ansprüche,
**dadurch gekennzeichnet, dass**
die Kanten am axialen Endbereich der Buchse (2) angefast ausgeführt sind.

7. Verbindung nach mindestens einem der vorangegangenen Ansprüche,
**dadurch gekennzeichnet, dass**
die Buchse (2) im Wesentlichen einem Hohlzylinder entsprechend ausgeformt ist.

8. Verbindung nach mindestens einem der vorangegangenen Ansprüche,
**dadurch gekennzeichnet, dass**
die Buchse (2) aus Teflon gefertigt ist.

9. Verbindung nach mindestens einem der vorangegangenen Ansprüche,
**dadurch gekennzeichnet, dass**
die Welle (3) und das Aufnahmeteil (1) aus Stahl oder Aluminium gefertigt sind.

10. Verbindung nach mindestens einem der vorangegangenen Ansprüche,
**dadurch gekennzeichnet, dass**
die Buchse (2) zur Ausformung des elastisch auslenkbaren Bereichs mit einer dünneren Wandstärke ausgeführt ist als in einem weiteren Bereich, der den ersten axialen Bereich der Well (3) nach deren Einführen ins Aufnahmeteil (1) umgibt.

11. Verbindung nach mindestens einem der vorangegangenen Ansprüche,
**dadurch gekennzeichnet, dass**
mittels des gegen die Wandung des Aufnahmeteils (1) angedrückten axialen Bereichs der Buchs (2) derart hohe Normalkräfte gegen die Wandung vorgesehen sind, dass zwischen Welle (3) und Aufnahmeteil (1) durch die Buchse (2) hindurch entsprechend hohe Drehmomente übertragbar sind.

12. Verbindung nach mindestens einem der vorangegangenen Ansprüche,
**dadurch gekennzeichnet, dass**
der Außendurchmesser der Buchse (2) passgenau zum Innendurchmesser der entsprechenden Ausnehmung des Aufnahmeteils (1) ausgeführt ist

13. Verbindung nach mindestens einem der vorangegangenen Ansprüche,
**dadurch gekennzeichnet, dass**
der Außendurchmesser der Welle (3) im ersten axialen Bereich passgenau zum Innendurchmesser der entsprechenden Ausnehmung der Buchse (2) ausgeführt ist

14. Verbindung nach mindestens einem der vorangegangenen Ansprüche,
**dadurch gekennzeichnet, dass**
die Welle (3) mit der Rotorwelle eines Elektromotors verbunden ist oder einstückig mit dieser ausgeführt ist.

15. Verbindung nach mindestens einem der vorangegangenen Ansprüche,
**dadurch gekennzeichnet, dass**
das Aufnahmeteil (1) ein Kupplungsteil einer zwischen einem Motor und einem Getriebe vorgesehenen Kupplung ist oder ein zu einem Getriebe gehöriges Teil ist.

## Claims

1. A connection of a shaft (3) to a receiving part (1), in particular shaft/hub connection,
the shaft (3) comprising a first axial region which can be received in the receiving part (1),
the shaft (3) having a further axial region with a greater diameter than in the first axial region,
a transitional region (5) being provided between the first and the further axial region, the diameter of which region in the axial direction increases from the first to the further axial region, from the value of the diameter of the first to the diameter value of the further axial region, in particular not exclusively abruptly,
with a bushing (2) being provided between the shaft (3) and the receiving part (1), **characterised in that**
the bushing (2) has an axial region, in particular an axial end region, which can be elastically deflected by the transitional region (5), in particular upon insertion of the shaft (3) into the receiving part (1), such that it is pressed against the wall of the receiving part.

2. A connection according to Claim 1, **characterised in that** the diameter of the shaft (3) in the first axial region is selected such that the shaft (3) can be provided in the bushing (2) with a precise fit.

3. A connection according to at least one of the preceding claims, **characterised in that** the external diameter of the bushing (2) in an axial region of the bushing (2) which surrounds the first axial region of the shaft (3) is selected such that the bushing (2) can be provided in the receiving part (1) with a precise fit.

4. A connection according to at least one of the preceding claims, **characterised in that** the transitional region (5) comprises at least a partial region in which the diameter increases highly monotonically as a function of the axial length.

5. A connection according to at least one of the preceding claims, **characterised in that** the transitional region (5) comprises at least a partial region in which the diameter increases as a function of the axial length corresponding to a circular function or corresponding to an elliptic function.

6. A connection according to at least one of the preceding claims, **characterised in that** the edges are embodied chamfered on the axial end region of the bushing (2).

7. A connection according to at least one of the preceding claims, **characterised in that** the bushing (2) is shaped substantially corresponding to a hollow cylinder.

8. A connection according to at least one of the preceding claims, **characterised in that** the bushing (2) is manufactured from Teflon.

9. A connection according to at least one of the preceding claims, **characterised in that** the shaft (3) and the receiving part (1) are manufactured from steel or aluminium.

10. A connection according to at least one of the preceding claims, **characterised in that** the bushing (2), in order to form the elastically deflectable region, is embodied with a thinner wall thickness than in a further region which surrounds the first axial region of the shaft (3) after the introduction thereof into the receiving part (1).

11. A connection according to at least one of the preceding claims, **characterised in that** by means of the axial region of the bushing (2) which is pressed against the wall of the receiving part (1) such high normal forces are provided against the wall that correspondingly high torques can be transmitted between the shaft (3) and the receiving part (1) through the bushing (2).

12. A connection according to at least one of the preceding claims, **characterised in that** the external diameter of the bushing (2) is embodied with a precise fit to the internal diameter of the corresponding recess of the receiving part (1).

13. A connection according to at least one of the preceding claims, **characterised in that** the external diameter of the shaft (3) in the first axial region is embodied with a precise fit to the internal diameter of the corresponding recess of the bushing (2).

14. A connection according to at least one of the preceding claims, **characterised in that** the shaft (3) is connected to the rotor shaft of an electric motor or is formed of one piece therewith.

15. A connection according to at least one of the preceding claims, **characterised in that** the receiving part (1) is a coupling part of a coupling provided between a motor and a transmission or a part associated with a transmission.

## Revendications

1. Assemblage d'un arbre (3) à une pièce réceptrice (1), en particulier assemblage arbre-moyeu,
sachant que l'arbre (3) comprend une première région axiale, qui peut être reçue dans la pièce réceptrice (1),
sachant que l'arbre (3) comprend une autre région axiale dont le diamètre est supérieur à celui de la première région axiale,
sachant qu'une région de transition (5) est prévue entre la première région axiale et l'autre région axiale, région dont le diamètre augmente en direction axiale depuis la première région axiale jusqu'à l'autre région axiale, de la valeur du diamètre de la première région axiale à la valeur du diamètre de l'autre région axiale, en particulier mais non exclusivement augmente brusquement,
sachant qu'une douille (2) est prévue entre l'arbre (3) et la pièce réceptrice (1),
**caractérisé en ce que** la douille (2) présente une région axiale, en particulier une région terminale axiale, qui peut être déviée élastiquement par la région de transition (5), en particulier lors de l'insertion de l'arbre (3) dans la pièce réceptrice (1), de telle sorte qu'elle est pressée sur la paroi de la pièce réceptrice.

2. Assemblage selon la revendication 1, **caractérisé en ce que** le diamètre de l'arbre (3) dans la première région axiale est choisi de telle sorte que l'arbre (3) peut être prévu en ajustement serré dans la douille (2).

3. Assemblage selon au moins une des revendications précédentes, **caractérisé en ce que** le diamètre extérieur de la douille (2), dans une région axiale de la douille (2) qui entoure la première région axiale de l'arbre (3), est choisi de telle sorte que la douille (2) peut être prévue en ajustement serré dans la pièce réceptrice (1).

4. Assemblage selon au moins une des revendications précédentes, **caractérisé en ce que** la région de transition (5) comprend au moins une région partielle dans laquelle le diamètre augmente de manière strictement monotone en fonction de la longueur axiale.

5. Assemblage selon au moins une des revendications précédentes, **caractérisé en ce que** la région de transition (5) comprend au moins une région partielle dans laquelle le diamètre augmente en fonction de la longueur axiale suivant une fonction circulaire ou suivant une fonction elliptique.

6. Assemblage selon au moins une des revendications précédentes, **caractérisé en ce que** les bords sur la région terminale axiale de la douille (2) sont réalisés chanfreinés.

7. Assemblage selon au moins une des revendications précédentes, **caractérisé en ce que** la douille (2) est réalisée sensiblement sous la forme d'un cylindre creux.

8. Assemblage selon au moins une des revendications précédentes, **caractérisé en ce que** la douille (2) est fabriquée en Téflon.

9. Assemblage selon au moins une des revendications précédentes, **caractérisé en ce que** l'arbre (3) et la pièce réceptrice (1) sont fabriqués en acier ou en aluminium.

10. Assemblage selon au moins une des revendications précédentes, **caractérisé en ce que** la douille (2) est, afin de former la région pouvant être déviée élastiquement, réalisée avec une épaisseur de paroi plus mince que dans une autre région qui entoure la première région axiale de l'arbre (3) à la suite de l'introduction de ce dernier dans la pièce réceptrice (1).

11. Assemblage selon au moins une des revendications précédentes, **caractérisé en ce que**, au moyen de la région axiale de la douille (2) pressée contre la paroi de la pièce réceptrice (1), des forces normales sont exercées sur la paroi avec une ampleur telle que des couples de rotation d'une ampleur correspondante peuvent être transmis entre l'arbre (3) et la pièce réceptrice (1) par l'intermédiaire de la douille (2).

12. Assemblage selon au moins une des revendications précédentes, **caractérisé en ce que** le diamètre extérieur de la douille (2) est réalisé en ajustement serré par rapport au diamètre intérieur de l'évidement correspondant de la pièce réceptrice (1).

13. Assemblage selon au moins une des revendications précédentes, **caractérisé en ce que** le diamètre extérieur de l'arbre (3) dans la première région axiale est réalisé en ajustement serré par rapport au diamètre intérieur de l'évidement correspondant de la douille (2).

14. Assemblage selon au moins une des revendications précédentes, **caractérisé en ce que** l'arbre (3) est relié à l'arbre de rotor d'un moteur électrique, ou est réalisé d'un seul tenant avec ce dernier.

15. Assemblage selon au moins une des revendications précédentes, **caractérisé en ce que** la pièce réceptrice (1) est une pièce d'accouplement d'un accouplement entre un moteur et une transmission, ou est une pièce faisant partie d'une transmission.
